Europäisches Patentamt

European Patent Office

Office européen des brevets

(19)

(11) EP 0 994 607 A1

## (12) EUROPEAN PATENT APPLICATION

(43) Date of publication:
19.04.2000 Bulletin 2000/16

(51) Int Cl.7: H04L 12/56, H04Q 11/04

(21) Application number: 99500171.6

(22) Date of filing: 23.09.1999

(84) Designated Contracting States:
AT BE CH CY DE DK ES FI FR GB GR IE IT LI LU MC NL PT SE
Designated Extension States:
AL LT LV MK RO SI

(30) Priority: 23.09.1998 ES 9801992

(71) Applicant: Telefonica, S.A.
28013 Madrid (ES)

(72) Inventors:
• Diaz Garcia, Juan Carlos.Telefonica,S.A.
28028 Madrid (ES)

• Merayo Fernandez, Luis Antonio.
Telefonica,S.A.
28028 Madrid (ES)
• Crespo Fidalgo, Jesus.Telefonica, S.A.
28028 Madrid (ES)

(74) Representative: Carpintero Lopez, Francisco
HERRERO & ASOCIADOS, S.L.
Alcalá, 35
28014 Madrid (ES)

### (54) Method and devide for MTA traffic shaping

(57) A method and device for shaping MTA traffic, for handling connections associated to a large number of users, which operates on 155 B/s links, according to the UTOPIA 16 bit standard, which transmits data bundled as cells, in which an algorithm is defined from certain data structures, consisting of two status machines, one for writing and one for reading, respectively associated to the cell storage and extraction processes. The device comprises three circuits which consist of a shaping circuit, a cell memory and a parameter memory, where the shaping circuit consists of a number of internal modules, including input and output modules, intermediate storage FIFO memory, interface modules, internal memory and input, output and control automatons.

FIG. 10

EP 0 994 607 A1

## Description

## OBJECT OF THE INVENTION

The present invention relates to a method and device for shaping MTA (Asynchronous Transfer Mode) traffic used in the specific application integrated circuit (MTA traffic shaper). The scope of application of the invention is the MTA technology wideband integrated digital service network. The device manages to reduce the network resources required to offer telecommunication services by distributing traffic so that the resources are used in a more constant manner.

Due to its simple implementation, the traffic shaping algorithm presented allows processing a large number of data channels of different natures, making it particularly well suited for use in network access points.

The field of application of the present invention is that of telecommunications, and more specifically it is particularly applicable to systems which use the wideband asynchronous transfer mode technology.

## BACKGROUND AND SUMMARY OF THE INVENTION

Wideband telecommunications services have been recently developed and the implementation of networks capable of offering these services presents novel difficulties. The first experimental platforms on which demonstrations were carried out of services which in the future could be offered on this type of networks had very defined network traffic characteristics, most often controllable by simple processes. At the present time wideband network design must cope with traffic generated by a large number of users which must be provided with the best possible service with the available resources.

The quality of service provided by the network is established according to the user's needs or requirements, so that they must be ensured for individual users and not for the accumulated traffic formed by all of their communications. This means that the contract agreed to by the users and the network administrators must be honoured regarding the available transmission rate for each one. One way in which the network can fulfill the requirements set in the traffic contract while minimizing resource use is to shape this traffic so that it is more manageable; the ideal traffic for maximum network resource efficiency is one with constant rate, as this way instantaneous data transmission rate is minimized.

Presently available network equipment allow traffic shaping on a limited number of users. The quality with which this function is performed, which can be established according to the difference between output traffic and a constant transmission rate, is not high enough for present requirements of the wideband integrated digital services network.

There is therefore a real need for solutions for the problem exposed above, which is the main object of the present invention. In this sense the simple implementation and scalability of the traffic shaping method used in this equipment as well as the novel solutions provided allow management of connections associated to a large number of users with a shaping quality which conforms to ITU standards (I.371).

The traffic shaping function described later in detail is performed on a 155 Mb/s MTA link which transmits data packaged as cells. Each MTA cell contains a header with information regarding the connection to which it belongs so that the cells can be identified as belonging to 256 different connections. The transmission link is slotted in cell intervals identified by an explicit cell interval start signal. Each cell interval in the transmission link may also contain information related to a valid data cell or be empty, which is detected by an explicit empty cell indication which remains active for the entire duration of the cell interval.

The input and output interfaces of this transmission link are buses compatible with the UTOPIA Standard, which is the interface recommended by ATM Forum for circuits performing MTA layer functions and those circuits which carry out physical layer functions (for more detailed information on function assignment to MTA process layers see recommendation ITV.311). This has been decided since the traffic shaping function is included in the MTA layer functions.

## BRIEF DESCRIPTION OF THE DRAWINGS

The characteristics and advantages of the invention will be made clear with the detailed description of the preferred embodiment below, provided for purposes of illustration and in a non-limiting nature referring to the enclosed drawings where:

Figure 1 shows a graphical representation of peak cell distributions before and after shaping;

Figure 2 shows a schematic representation of the logical functioning of the traffic shaping;

Figure 3 shows a schematic representation of the initiation process for the empty cell queue;

Figure 4 shows a graphical representation related to the outstanding extractions list and status table;

Figure 5 shows a schematic representation of the writing process for the first cell;

Figure 6 shows a schematic representation of the writing process for a cell which is not the first cell;

Figure 7 is a graphical representation of the extraction process of a cell;

Figure 8 corresponds to a schematic representation of the displacement of an arriving cell by the sum of a semi-random value to the time counter;

Figure 9 shows a diagram of the physical scheme of the shaping device and

Figure 10 shows a block diagram for the internal architecture of the ATS circuit of Specific Application, traffic shaper of the present invention.

## DESCRIPTION OF THE PREFERRED EMBODIMENT

In order to carry out the detailed description of the preferred embodiment of the present invention, we will first refer to what is known as traffic shaping, and which according to recommendation I.371 consists of a mechanism which changes the traffic characteristics of a cell train in a Virtual Channel Connection (hereunder VCC) or in a Virtual Path Connection (hereunder VPC) to achieve the desired modification in these characteristics in order to obtain a greater efficiency in the network while the service quality goals are met, or to ensure conformity in a later interface.

From this definition it would follow that traffic shaping consists of all manipulations of the traffic which improve the efficiency of the network, but the above mentioned recommendation also clarifies the manipulation considered appropriate, by establishing that "examples of traffic shaping are reduction of the peak cell rate, limitation of the bursts length, reduction of Cell Delay Variation (CDV hereunder) by a suitable spacing of cells in time, and the queue service schemes".

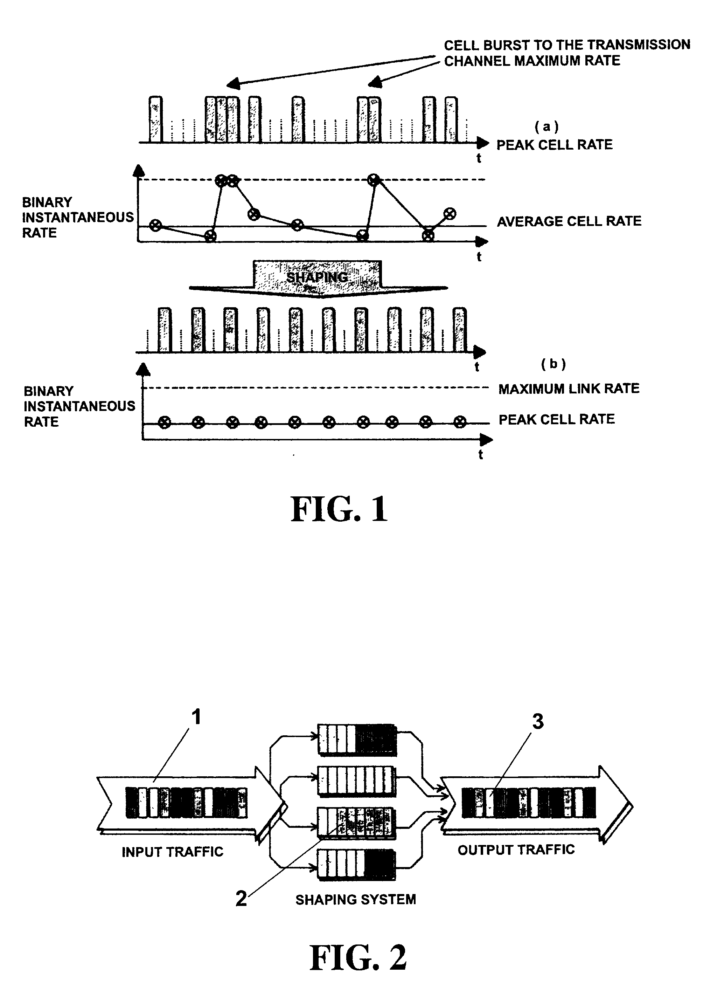

Without great detail, and only in order to clarify the concepts which appear above, a VCC or VPC consist of a virtual channel or path or, more generally, an MTA connection. Each MTA connection is characterised by a peak cell rate, which is its maximum number of cells per unit time. Another characteristic of the traffic is the presence of bursts and their length, i.e., time intervals in which the cell transmission rate is high, and the duration of these intervals. Lastly, the term CDV is assigned to the representation of the time elapsed between consecutive cells of the same connection, so that if a connection is characterised by a large number of bursts the CDV parameter is large. Traffic shaping mechanisms must strive to reduce or even eliminate CDV, i.e. to eliminate consecutive cell bursts; a traffic without bursts of a higher instantaneous transmission rate, therefore with a peak rate equal to its average rate, is known as having constant binary rate or CBR. Figure 1 shows two graphs a) and b) where the above concepts are shown for a 51.6 Mb/s connection on a 155 Mb/s channel, where it can be seen that for both cases one third of the cell intervals are occupied by the connection, although in a) the distribution is not uniform but with bursts, so that it may be difficult to multiplex another connection on the same channel, while for b), after shaping, the distribution is uniform with a complete elimination of the bursts.

The traffic shaping methods used in the ATS circuit intends to obtain a CBR output traffic for each of the 256 input connections supported.

The mathematical justification of the shaping method is given below: Given a link with binary transmission rate $V_1$ and the average binary rate of a connection in this link is $V_c$, since $V_1 > V_c$:

$$V_c = V_1 \frac{N}{2^k}$$

*with*
$N \in [1, 2^k]$

Where N is a positive integer expressed in k bit binary arithmetic, and the link is slotted, i.e. data dells can only be transmitted at the times given for the cell timing. Substituting the possible values for N, the possible average binary rates are:

$$V_c \in \left[ \frac{V_1}{2^k}, V_1 \right]$$

For shaping traffic one wishes the data cells of each connection to be uniformly distributed n the output transmission link, i.e. the IDT (Inter Departure Time) between consecutive cells of the connection must be set. The number of cell times between two consecutive ones in the same connection can be found as the inverse of the binary rate expressed in terms of transmission link cell intervals:

$$IDT = \frac{2^k}{N.V_1}$$

A time separation in accordance with these parameters is obtained as follows:

In first place, the connection to which the cell belongs is identified and stored in a queue for said connection (further details on the storage process are given below):

The first cell arriving at the queue is removed from it immediately after arrival since at is the first one there is no time reference with respect to the previous one;

There is a transmission link cell interval counter which is taken as a time reference, and when the cell is extracted the counter value for which a cell from this connection must be extracted again is calculated (by simply adding the IDT) and stored in a part of the memory;

Each time the circuit detects that it must extract a cell from the link queue by reading the corresponding remark in the memory, the calculation is performed again and the time of the new extraction recorded, and in addition each time a new cell from the connection arrives it is stored in the queue so that it becomes the last cell in it.

This set of actions has been divided between two automatons or finite status machines which split the tasks: the writing automaton which performs the storage tasks and the reading automaton which is in charge of extracting the cells.

So that the granularity (variation between the values which can be programmed for the output binary rate) meets the requirements of recommendation ITV. 371, an additional speed parameter must be included and the IDT value calculated as a quotient plus a remainder; this is because the circuit employs k bit integer arithmetic :

$$IDT = \frac{2^k}{N} = C + R/N$$

Where C = integer $(2^k/N)$ and R = rem $(2^k/N)$

Calculation of the cell intervals which must be left between two consecutive ones of a given connection is somewhat more complex. The parameters programmed are C and AC = $2^k$ R/N. Each time a cell is extracted C cell intervals are allowed to pass and a k bit counter is increased by the value of AC, and for the extraction where this counter overflows (is greater than $2^k$) C+1 intervals are allowed to pass as a "fine tuning" mode.

The traffic shaping is carried out on the set of the 256 possible connections transmitted by the same link. The operational scheme from a logic point of view is that of a system of 256 queues with a sequential queuing or storage process (data cells are stored in the order in which they arrive) but with a special reading process based on the traffic shaping algorithm defined below, schematically shown in figure 2, where block (1) represents the input traffic which does not meet the requirement of a constant transmission rate per connection, and after being shaped in (2) by the system of queues with cell extraction at a constant pace, the shaped output traffic (3) is obtained with a constant time between cells (for each connection).

As regards the traffic shaping algorithm employed, and for a better comprehension of its operation, it will be divided into two status machines, just as in the circuit elaboration. The status machine associated to the cell storage procedure is known as writing automaton and the process related to cell output is performed by the reading automaton. Each operates independently although not simultaneously since they use common resources and contingency occurs.

In order to execute this algorithm the following data structures are required:

- Cell storage spaces. All cells are stored in one memory which is compartmentalised in cell spaces (of 512 bits). Each cell space can be empty or contain a cell of any connection. The circuit can manage 49152 cell spaces.

- Connection descriptors. These are complex structures, one per connection, which contain the cell control data: the address (pointer) of the first cell space containing one of this queue; the number of cells stored in this queue; the maximum number of cells allowed for the queue and other parameters related to the MTA layer process.

- Cell time interval counter in the transmission link. This is a 12 bit free counting counter, which increases with each cell interval in the transmission link and which acts as a reference for the time measurements. It returns to 0 automatically on reaching its maximum value. IDT times above this maximum counter value cannot be calculated.

- Outstanding cell extractions list. This list has a space for each value of the cell interval time counter, in which is stored the identifier of the connection from which a cell must be extracted in this interval. As mentioned before, every time a cell is extracted from the queue the number of time intervals which must pass until another cell is extracted from the connection is calculated, based on the counter, to which the IDT is added; the resulting value will indicate the address of this list in which the connection identifier is stored. To be dealt with after said time interval. It is not a problem if the sum is greater than 4096 (maximum counter value) as this value is reached on the following turn of the counter. The only limitation is that the IDT cannot be greater than 4096 since this implies more than one counter turn.

- Outstanding extractions list status table. For each time interval of the real time counter a cell may or may not have to be extracted, in which case the cell space would be left empty in the output link. This table contains a "I" at the address which corresponds to the counter from which a queue cell must be extracted (whichever this is, the queue identifier is stored in an outstanding cell extractions list), and a "0" otherwise.

- Table of pointers to the next cell space. Each cell space in the cell memory, which as mentioned above may or may not contain a cell, has a position assigned to it in this table, so that if the corresponding space does not contain a cell, this address has the next empty space, and if it does contain a cell, the address stores the address of the cell space which contains the next queue cell (from the point of view of time, since it has arrived later and is stored later).

- Pointer to first empty cell space. This is the address of the memory space not occupied by a cell, which is used to store the following cell which arrives through the transmission link.

- Pointer to last unoccupied cell space. Stores the address of the unoccupied memory space after which the next cell space freed is to be placed (in a logical sense) because a cell has been extracted from a queue.
- Empty cell space counter. Maintains an updated account of the number of empty cell spaces in the memory. When it is 0 (no free spaces) the cells received through the transmission link are rejected.

Initially the data structures described are assigned the following values:

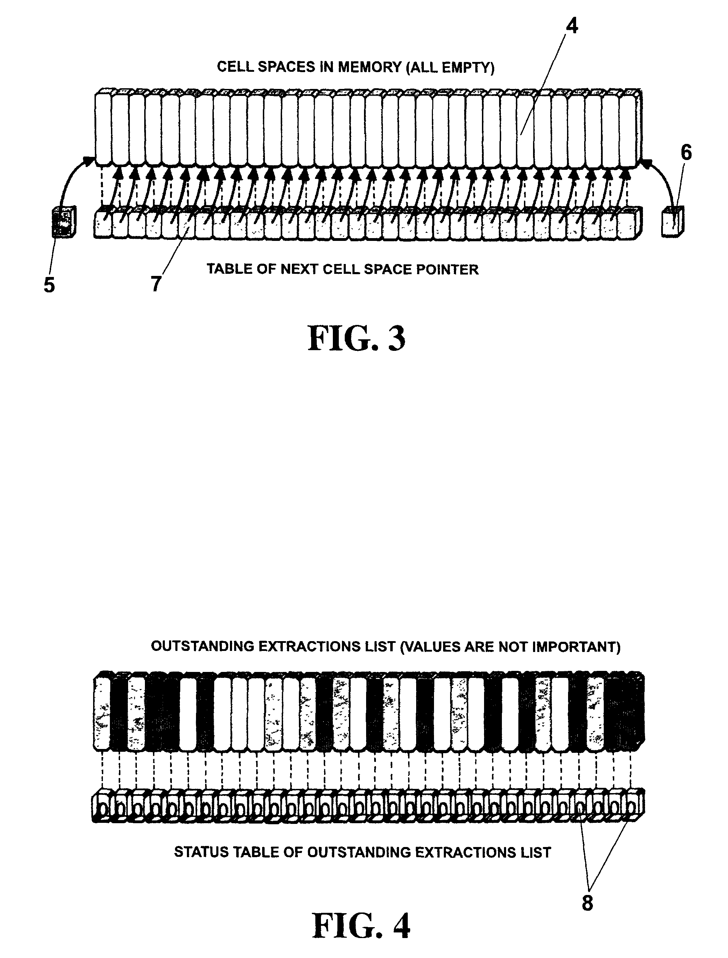

- All cell spaces are declared empty forming a sort of "empty cell spaces queue". This is achieved by assigning the first empty cell space pointer with the value of the first empty memory address, and the last with the last one. In the next cell space pointer table each position contains the address of the following space and the empty cell space counter has the value of the total number of memory cell spaces. This situation is described graphically in figure 3 of the Drawings, where a block (4) represents the memory cell spaces (all empty), a pointer (5) assigned to the first empty cell space, a pointer (6) assigned to the last empty cell space and a pointer table (7) where each are oriented so that they point towards the following space (in spatial terms).
- The entire outstanding extractions list at "0" since there are initially no cells in any queue. It is not necessary to initiate the extraction list at any value because the status table already indicates that the stored values are not important. Figure 4 represents this situation in which all addresses (8) are at zero, showing that there are no outstanding extractions.
- The cell time counter begins at 0 and increases with each cell time in the transmission link. We will assume that non valid cells are received first so that the counter increases but no cells are stored.
- The connection descriptors have uncontrolled initial values, so that the first operation which must be carried out by the control system through the control bus is to program the correct values in the descriptors to be used in the operation.

A description follows of the traffic shaping algorithm writing automaton, starting with the circuit initialised as described above, from the time when the first cell is received and stored in the corresponding queue. The arrival of a valid cell identified as belonging to a connection for which a queue is provided (parameters are programmed in the descriptor) triggers the following sequence of events:

- Checking the number of empty cell spaces: if there are any, the cell is stored at the address of the first one and I is subtracted from the empty cell count.
- The address of the first cell space, where the new arrival is stored, is copied in the descriptor as a pointer to the first and last cell of the queue (it is both), and I is added to the number of cells in it, so that it becomes I.
- The address of the following cell space (extracted from the next table pointers) is assigned as a first empty cell space pointer.
- As the connection queue is initially empty, a cell interval must be added to the extraction list, which is done by checking the status table for the extraction list and assigning the first empty time from the cell time counter (which sets the timing).

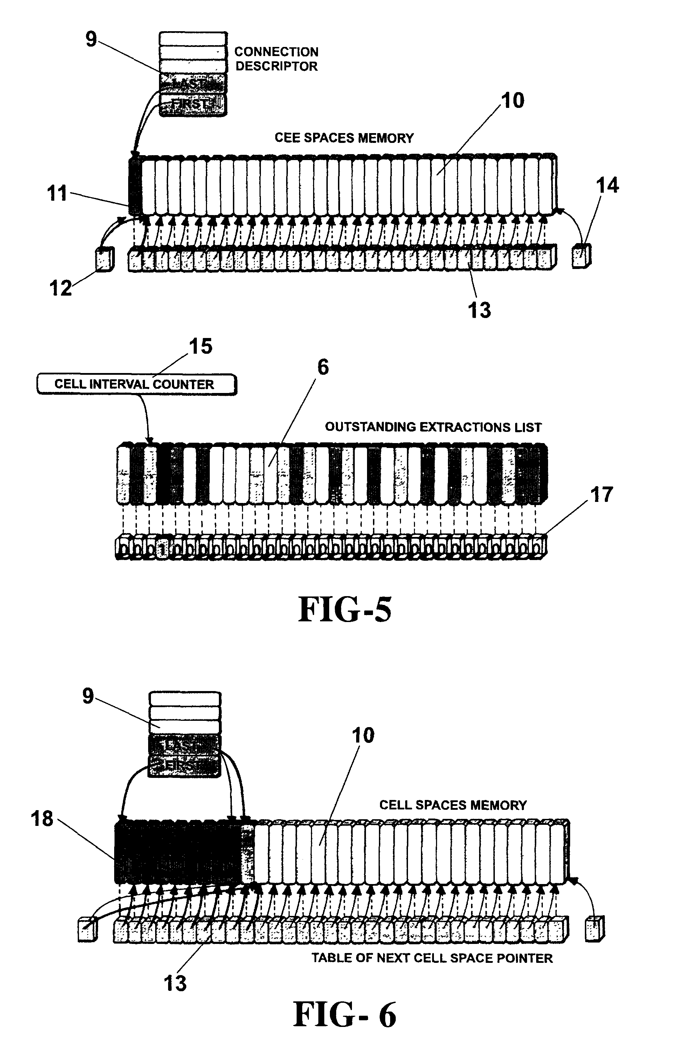

The graphical representation of the writing process of the first cell described appears on figure 5 of the Drawings. This shows the connection descriptor labelled (9), the cell space memory block (10), the newly arrived cell (11) occupying the first space, assignation of pointer (12) to the following cell space, a representation of the table (13) of next cell space pointers, and the pointer (14) assigned to the last empty cell space. After this in the same figure is a representation of cell intervals counter (15) by which the first free interval is reserved in the outstanding extractions list (16) and marked (as "I") in outstanding extractions list status table (17).

When cells are already stored in the queue of the cell which arrives the process is slightly different:

- As in the previous case, the cell is stored in the first empty space (if there are any) and their number is decreased. The address of this space, which now is full, is copied to the table of next cell pointers, in the one assigned to the last cell stored in the queue.
- The end of queue pointer is changed to the address where the new one has been stored and I is added to the number of cells stored in the queue.
- The address of the next cell space (extracted from the table of next cell pointers) is assigned as first empty cell space pointer. In this case it is no longer necessary to point at the extractions list since, as will be explained below, the reading automaton is in charge of pointing when the previous cell is extracted from the queue.

An example of a cell arriving when there are others in the queue already is shown in figure 6. Here all cells (18) are placed consecutively in the memory, which only occurs when there is a single active connection (queue); if there is more than one the cells will be shuffled so that the ones belonging to the same connection are not consecutive. This creates a need for the table of next cell space pointers (13) mechanism. With this mechanism empty cell spaces can be used by any connection so that the available memory is shared evenly among the queues.

Regarding the reading automaton, this is the mechanism in charge of extracting the cells, which is done according to the following procedure:

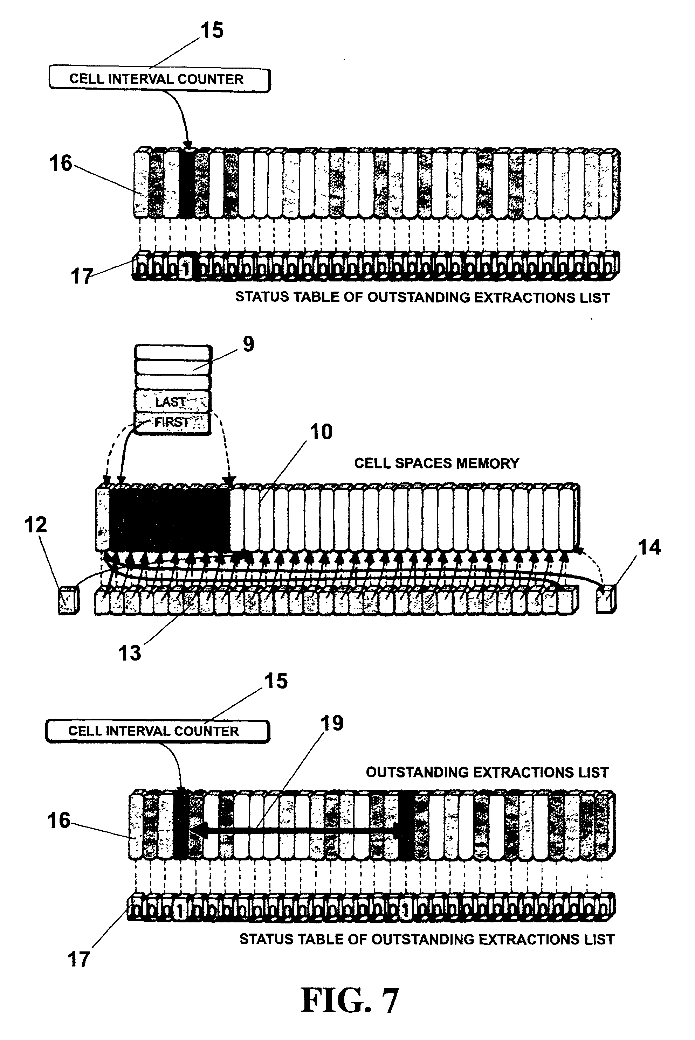

- the status of the outstanding extractions list is checked, and if there is a connection noted on the position assigned to the time interval which corresponds to the cell time counter value, a cell is extracted from said connection.
- To perform the extraction the connection descriptor is checked and the pointer obtained for the memory space occupied by the first cell, which is extracted. After this the table of next cell space pointers is checked and the next one is assigned as the first cell space pointer. In addition, I is subtracted from the queue cell number.
- The cell space where the extracted cell was stored is added to the empty cell space queue. For this its address is assigned as following that of the last empty cell space pointer in the table of next cell space pointers, and the address is stored in the last empty cell space pointer. The graphical representation of this process is shown in figure 7 where the status of the extraction list address which corresponds to cell time counter value is checked and if this address contains an extraction note, the information contained is used to extract the cell (level "I" in the outstanding extraction list status table); after this the cell in the address of the first cell space pointer is extracted and the first cell space pointer is assigned by the pointer to the one after the first, as shown in the representation of pointers between descriptor (9) and memory (10) of cell spaces, assigning the value of the address of the last cell extracted to the next cell pointer of the last empty space address (table (13), next cell pointers), and the last empty pointer (14) is assigned the address of the sole where the last extracted cell was. After this the programmed IDT value is added to the value of the cell interval counter and the address obtained for the following extraction, as shown by the IDT interval labelled (19). Lastly, the outstanding extraction is entered on the list and in the status table.
- The number of cell intervals which must pass before extracting another cell from the same queue is calculated with the cell time counter, plus the IDT value programmed in the connection descriptor.
- The result of this operation indicates the place of the outstanding extractions list where the extraction of the next cell in the queue is entered.

It is therefore clear that there is a feedback in the reading mechanism, and that when a cell is extracted from a queue the time when the next one is to be extracted is set. There are thus two situations which are yet to be dealt with, to wit:

- If the last cell in the queue is extracted the time for extracting another is entered, although there are no more. If no new cells have arrived at that queue when the time for extraction arrives there is nothing to extract, so the transmission link is left empty and no new extraction time is entered. When a cell arrives it will be the first in the queue and the writing automaton shall make the corresponding entry as described above.
- If the address which is obtained from the calculation of the extraction list is taken by one from another queue, the first free cell time after that is searched for, so that the IDT may end being greater than the programmed one in the event of a lot of traffic in the transmission link.

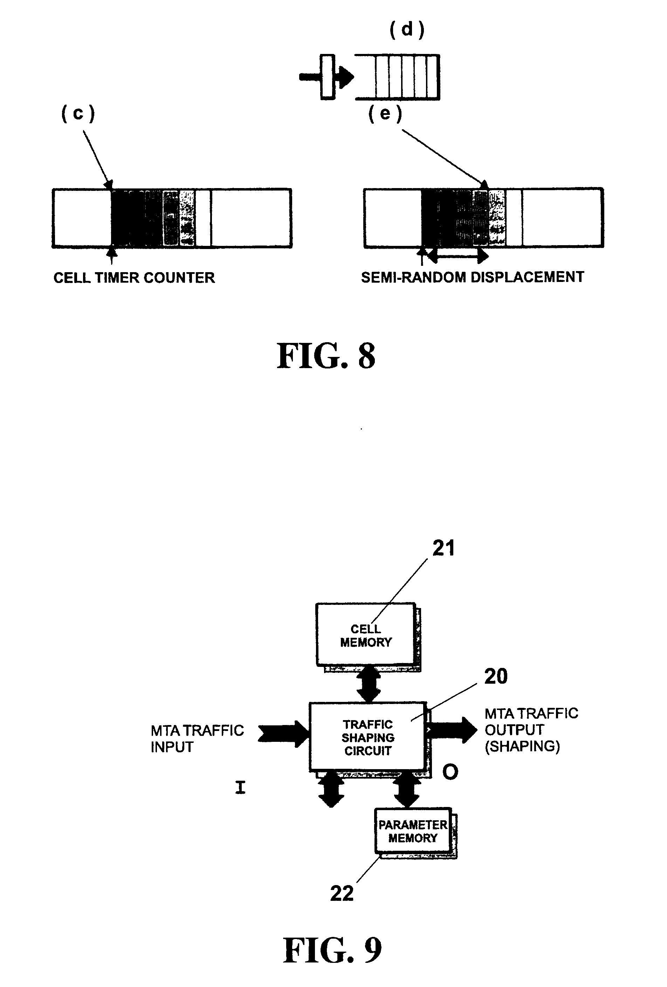

Before designing the circuit which performs this algorithm a simulation of its behaviour was made using traffic patterns in the transmission link which correspond to what is identified as a "worst case" link load. The result of these simulations is that the algorithm can work correctly in these conditions, but with a sector of the extractions list status table very full (many annotations accumulate), which is that immediately after the cell time counter at each time, as shown in figure 8. This problem is due to the fact that when the traffic rate varies strongly over time the connection queues are often emptied, resulting in that many cells arrive at an empty queue and attempt to enter their extraction for the first free space after the one indicated by the cell time counter (diagram (c) shows a densely occupied extraction list which makes it difficult to find an open time); in order to avoid this situation a mechanism has been incorporated by which a pseudo-random number is added to the cell time counter (diagram (e)) for making this entry, so that the entries for the arriving cells (diagram (d) are uniformly distributed. This mechanism affects the quality of traffic shaping, but only minimally and for certain traffic patterns.

Now that the description of the MTA traffic shaping method of the present invention has been made, what follows is a description of the system by which this method is implemented, which preferably consists of three different circuits, to wit: an ATS specific application circuit and two conventional commercial memories, where the data structures described above are stored. The physical arrangement of the system is described in figure 9, where the numerical references are assigned so that (20) is the traffic shaping circuit and (21, 22) are respectively a cell memory and a parameter memory. The arrows represent the buses which correspond to the connection between said circuit (20) and cell and parameter memories (21, 22), as well as MTA traffic input (E), output (S) and control bus (C).

Regarding cell memory (21) it consists of one or more commercial memories and is used to store the information contained in the MTA cells while these remain in their connection queue. The circuit organises it into cell storage spaces (512 bits each). The circuit which has been built and tested includes three dynamic RAM burst access memory circuits of 256Kx32 each, although the Specific Application Integrated Circuit (ASIC) can be programmed to be used from 4Kx32 (256 cells) up to a maximum of 720Kx32 (45K cells) in 4Kx32 intervals. Control of cell space occupation is performed by the list of next cell space pointers, with this structure stored in the parameters memory.

A static 64Kx16 RAM memory has been used for the parameters memory, divided into several segments in order to fit the different data structures required in the traffic shaping algorithm process, which are:

- Linked List Control Segment: this segment contains the list of next cell space pointers. There is a pointer (memory address) for each cell storage space in the cell memory. The size assigned to this segment in the specific example is 45K, so that the maximum number of cell storage spaces in the cell memory is 45K cells (720Kx32), although with the 16 bits of data used by this segment up to 64K addresses could be expressed.
- Outstanding Actions Segment: this segment stores the list of outstanding extractions. It has 4096 positions (as many as there are possible values for the cell time counter) and 8 bits of data are used so that entries can be made on 256 different connections.
- Busy Times Segment: this segment stores the status table for the outstanding extractions list. It contains 1 bit per position on the list to indicate whether a cell extraction of any connection must be performed or not at the cell time which corresponds to each position. The connection identifier, particularly the one for which a cell is extracted is shown in the outstanding extractions list. This segment is organised in 256 words of 16 bits each (each datum represents the status of 16 consecutive positions on the extractions list).
- Queue Descriptors Segment: This segment contains the descriptors for each connection which can be processed by the ATS. Up to 256 different connections can be defined, and in this segment are stored the parameters related to the connection (IDT, MTA process parameters) and the variables of the corresponding queue control mechanism (addresses of the first and last memory spaces which are occupied by cells of the connection, number of cells stored, maximum number of cells allowed in the queue, etc.). Each descriptor consists of 8 words of 16 bits distributed in a predefined way. There are 256 descriptors, so that this segment occupies 2Kx16.

The remaining data structures needed to perform the algorithm is stored in internal registers of the circuit. These are the following data:

> Cell time counter
> First empty space pointer (address)
> Last empty space pointer and
> Counter for number of empty spaces left in the memory.

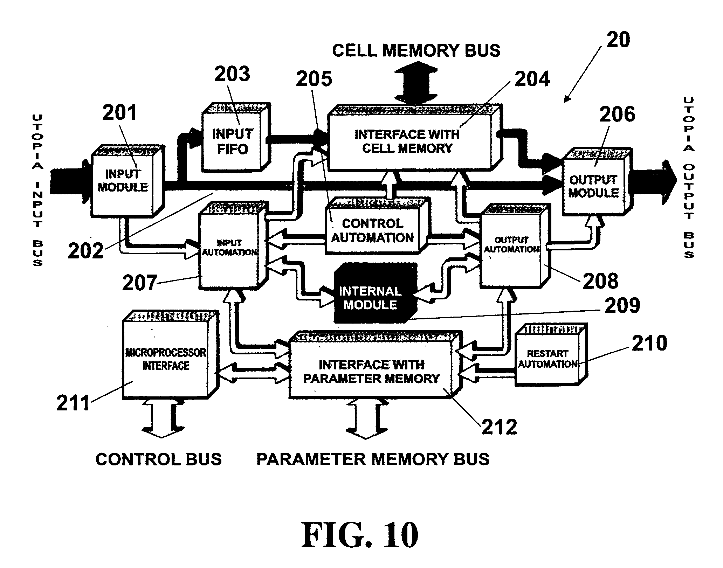

Lastly, as regards the ATS traffic shaping circuit (20) it is internally subdivided into a number of blocks which are shown in figure 10 of the Drawings. According to this the following modules can be seen:

- Input module (201): in charge of adapting the UTOPIA 16 bit data input format to the internal 32 bit data format; in addition, it extracts the identifier of the connection to which the cell belongs and delivers it to the writing automaton so that it can begin the cell arrival process of the algorithm. There is also a direct connection between the input and output modules for cells which cannot be delayed (real time cells) which are not stored in the queue and are immediately extracted to the transmission link. This connection is shown as (202);
- FIFO input memory: it is labelled (203) and consists of an intermediate data storage unit. The data which the input module delivers, although adapted to the internal format, cannot be directly written in cell memory (21) since the writing protocol in the memory does not allow this (different writing clock).
- Interface with cell memory module: this module is labelled (204) and with it the communication interface with the cell memory, is centralised, taking advantage of the fact that cell writing and reading operations are performed in different time intervals. Distribution of access to the cell memory is governed by the control automaton (205), so that in the transmission link the following can be multiplexed in the same cell cycle:

> a) Writing of cells stored in FIFO input memory (203) in cell memory (21) and
> b) Cell reading in cell memory (21) towards the output interface.

- Output module: labelled as (206), is in charge of adapting the format of the data read in external cell memory (21), at 32 bits with burst access timing, a standard format according to a 16 bit UTOPIA interface. In addition it incorporates a small intermediate storage unit for absorbing the memory bursts.
- Input automaton (writing): identified as block (207), it is a module for carrying out the algorithm functions related to cell arrival processes and their later writing in the external memory as described in the previous section.
- Output automaton (reading): this block, labelled (208), carries out the algorithm functions associated to cell output in the manner described above.
- Control automaton: this module (205) is in charge of the general circuit control; in it reside the cell time counter and the cycle counter within each cell to assign time windows to the input and output automatons, as they both operate in different instants within the cell cycle.
- Internal memory module: it was found in simulations that when traffic was very dense (very busy transmission link) in order to find an empty cell time to enter the cell extraction it is necessary to search a high number of consecutive positions in the outstanding extractions list; in order to carry out this reading in one cell time this internal memory labelled (209) has been provided, where general information is available on the status table for this list in the internal memory.

- Restart automaton: this module (210) is in charge of initiating the required data structures, to wit:

> i) it initiates the linked list control segment so that all cell spaces are assigned to the empty cell queue consecutively,
> ii) it initiates the busy times segment; initially it must show that all positions are empty.

- Microprocessor Interface Module: labelled as (211), it contains the internal circuit programming records and allows access to these records by a standard asynchronous parallel interface known as VME (Versa Module Eurocard).
- Interface with the parameter memory module: Is shown labelled as (212) and it provides the communication interface with the parameter memory.

All of the above corresponds only to a preferred embodiment of the invention, so that experts in the field may find many modifications based on the revelations of the invention and included within the scope of its protection, which is set by the following Claims.

## Claims

1. Method for shaping MTA traffic which may be applied in wideband telecommunications services for managing connections associated to a large number of users, whose function is carried out on 155 B/s MTA links according to the UTOPIA 16 bit standard, which transmit information bundled as cells, characterised by a shaping algorithm for which data structures are defined, which include:

   - cell storage spaces, compartmentalized in a memory where all the cells are stored and where each space may be empty or contain a cell belonging to the queue of any connection;
   - Connection descriptors which consist of complex data structures, one per connection, containing the data related to queue control, such as address (pointer) of the first cell space containing one of this queue, the address of the last cell space containing one of this queue, the number of cells stored in the queue, the maximum number of cells allowed in the queue and other parameters related to the MTA layer process;

   - counter for the cell time interval in the transmission link, consisting of a suitable free counting counter, which increases with each cell interval in the transmission link and which is used as a reference for time measurements, returning to 0 as the maximum value is reached, and whose maximum value for the counter is the maximum limit for IDT values;
   - outstanding cell extractions list, with a space for each value of the cell time counter where the identifier is stored of the connection from which the cell is to be extracted in the interval, so that each time a cell is extracted from a queue, the number of cell intervals which must pass before another cell is extracted from this connection is calculated taking as a base the counter plus the IDT, where the resulting value shows the address of the list where the connection identifier is stored to be dealt with when the aforementioned time interval is reached;

   - status table for the outstanding cell extractions list, with a "1" in the address corresponding to the counter when a cell must be extracted from a queue and "0" otherwise:

   - next cell space pointers table, where each cell space in the cell memory, whether it contains or not a cell, has a position assigned in this table, so that if the space has no cell this address contains the next empty space, whereas when it does contain a cell the address stores the address of the cell space containing the next cell in the queue;
   - first empty cell space pointer, consisting of the address of the memory space not occupied by a cell which will be used to store the next cell which arrives through the transmission link, and
   - last empty cell space pointer, which stores the address of the unoccupied memory space after which will be placed the next memory space freed by extracting a cell from a queue;
   - number of empty cell spaces counter, with which the account of the number of empty cell spaces in memory is kept updated, so that when this number is 0, that is, there are no empty spaces, the cells received through the transmission link are rejected.

2. Method as in claim 1, characterised in that in said traffic shaping algorithm two status machines are defined which are respectively associated to cell storage, comprising the writing automaton and cell extraction, comprising the reading automaton, which operate independently but at different times since they use common resources, and of which the writing automaton, after arrival of a first valid cell identified as belonging to a connection for which a queue is provided, proceeds in the following manner:

- the number of empty cell spaces is checked, and if there are any, the cell is stored in the address of the first one and I is subtracted from the empty cell counter;
- the address of the first cell space where the recently arrived cell has been stored is copied in the descriptor as first and last queue cell pointer, and I is added to the number of cells in the queue, which becomes I;
- the address of the following cell space, which is extracted from the next pointer table is assigned as first empty space pointer;

- a cell interval is entered in the extraction list, since the connection list was previously empty, which is done by checking the extraction list status table and assigning the first empty space starting from the value of the cell time counter in charge of setting the timing, while the reading automaton, in charge of cell extractions proceeds in the following manner:

- it checks the status of the outstanding extractions list and if it finds a connection entered in the position assigned to the time interval which corresponds to the cell time counter it extracts a cell from the queue of this connection;
- to carry out the extraction, it checks the connection descriptor and obtains the pointer for the memory space occupied by the first cell in it, which is then extracted; it then checks the next cell space pointers table and assigns the next one as first cell space of the connection pointer, while I is subtracted from the number of cells in the queue;
- it adds the cell space in which the extracted cell was stored to the empty cell space queue, for which its address is assigned as following the address of the last empty cell space pointer in the next cell space pointers table and its address is stored in the last empty cell space pointer;
- it calculates the number of cell intervals which must be allowed to pass before another cell is extracted from the same queue, using the cell time counter and adding to it the IDT value programmed in the connection descriptor, and
- it takes the result of this operation as indicative of the place in the outstanding extractions list where the extraction of the next queue cell is entered.

3. Method as in claims 1 and 2, characterised in that when the valid cell arrives at the queue while there are other cells previously stored in it, the writing automaton proceeds in the following manner:

- as for the empty queue case, the cell is stored in the first empty space, if there is one, and the number of spaces is reduced, and copying the address of this space which is now occupied in the next pointer table in that assigned to the last cell stored in the queue;
- it changes the last in queue pointer to the address in which the new one has been stored, and the number of cells stored in the queue is increased by I, and
- assigns the address of the next cell space as first empty space pointer, extracting it out of the next pointers table, without requiring in this case an entry in the extractions list since the reading automaton is in charge of making this entry when it extracts the previous cell from the queue.

4. Method as in claims 1 to 3, characterised in that the aforementioned reading automaton receives feedback, and when a cell is extracted from a queue the time when the next one is to be extracted is set, where two particular situations may appear:

- when the last cell is extracted from the queue the time when another one is to be extracted is entered, and if at that time there are no cells in the queue the transmission link is left empty and a new extraction time is not entered, so that when a new cell arrives, which will be the first in the queue, the writing automaton carried out the entry, and
- if the address which results from calculation of the extraction list is taken by an action of another queue, the first free cell space is searched for, so that an IDT greater than that programmed may occur at times of great traffic in the transmission link.

5. Device for shaping MTA traffic, with which the method of claims 1 to 4 is implemented, characterised in that it is built around three specific circuits, to wit, a traffic shaping circuit (20) and two memories, a cell memory (21) and a parameters memory (22), intended for storing the data structures required to carry out the shaping algorithm, of which:

- said cell memory circuit (21) consists of one or two conventional memories in which the information contained in the MTA cells is stored while these remain in their connection queue, this memory organised in spaces for cell storage, where control of the occupation of cell spaces is carried out by the list of next cell space pointers, and
- said parameters memory (22) preferably consists of a static RAM memory of a certain capacity divided into a number of segments to house the different data structures needed for the traffic shaping algorithm, with this division preferably consisting of:

- linked list control segment, which contains the list of next cell space pointers, with one pointer existing for each cell storage space of the cell memory;

- busy times segment, which stores the outstanding extractions status table, with this outstanding extractions list containing the identifier of the specific connection from which the cell is extracted, and

- queue descriptors segment, which includes the descriptors for every connection which the traffic shaping circuit can process, and which will preferably be up to 256 different connections, also storing in this segment those parameters related to the connection and the variables of the control mechanism for the corresponding queues.

6. Device as in claim 5, characterised in that said traffic shaping circuit (20) incorporates a number of internal blocks conveniently connected to each other, which basically consist of:

- an input module (201) with which the input traffic format is adapted to the internal traffic format, and with which the identifier is extracted for the connection to which the cell belongs and delivers it to the writing automaton so that the latter can begin the cell arrival process of the algorithm, also provided with a direct connection between this input module and output module (206) for those cells which cannot be delayed ("real time" cells), without therefore storing them in the queue, and which are immediately extracted to the transmission link;

- an FIFO memory input module (203), which is an intermediate data storage unit;

- a module (204) for interface with cell memory (21), in which the communication interface with the cell memory is centralized, taking advantage of the fact that reading and writing operations are performed in different time intervals, and whose distribution of access to cell memory (21) is ruled by control automaton (205) so that multiplexing is possible in the same cell cycle in the transmission link of both the cell writing stored in the FIFO input memory (203) in the cell memory and the cell reading of the cell memory towards the output interface;

- output module (206), with which the format of data read in the external cell memory (21) is adapted, at a certain rate and with a access timing by bursts, to a standard format complying with a certain UTOPIA interface, this module also including a small intermediate storage unit for absorbing the memory bursts;

- input (writing) automaton (207), with which the algorithm functions associated to the cell arrival process and their later writing in the external cell memory (21);

- control automaton (205), which is in charge of the general circuit control, and in which resides the cell time counter and the cycle counter in each cell interval, so that time windows are assigned to input (207) and output (208) automata;

- internal memory module (209) with which in the event of very dense traffic (very busy transmission link) an empty cell time may be found in which to enter the cell extraction, by checking a very large number of consecutive positions of the list of outstanding extractions in I cell time, for which general information is available on the status table for this list in this internal memory;

- restart automaton (210), with which the linked list control segment functions can be initiated, so that all cell spaces are assigned to the empty cell queue consecutively, and with which the busy times segment can be initiated, with the initial indication that all positions are unoccupied;

- microprocessor interface (211), which contains the internal programming records of the circuit and which allows access to these records by a suitable standard asynchronous parallel interface, and

- parameter memory interface module (212), by which the communications interface with said parameter memory (22) is provided.

FIG. 1

FIG. 2

CELL SPACES IN MEMORY (ALL EMPTY)

TABLE OF NEXT CELL SPACE POINTER

# FIG. 3

OUTSTANDING EXTRACTIONS LIST (VALUES ARE NOT IMPORTANT)

STATUS TABLE OF OUTSTANDING EXTRACTIONS LIST

# FIG. 4

9

CONNECTION
DESCRIPTOR

LAST
FIRST

10

CEE SPACES MEMORY

11

12

13

14

15

CELL INTERVAL COUNTER

6

OUTSTANDING EXTRACTIONS LIST

17

## FIG-5

9

LAST
FIRST

10

CELL SPACES MEMORY

18

13

TABLE OF NEXT CELL SPACE POINTER

## FIG- 6

**15**

CELL INTERVAL COUNTER

**16**

**17**

STATUS TABLE OF OUTSTANDING EXTRACTIONS LIST

**9**

LAST

FIRST

**10**

CELL SPACES MEMORY

**12**

**14**

**13**

**15**

CELL INTERVAL COUNTER

**19**

OUTSTANDING EXTRACTIONS LIST

**16**

**17**

STATUS TABLE OF OUTSTANDING EXTRACTIONS LIST

# FIG. 7

( d )

( c )

( e )

CELL TIMER COUNTER

SEMI-RANDOM DISPLACEMENT

# FIG. 8

**21**

CELL
MEMORY

**20**

MTA TRAFFIC
INPUT

TRAFFIC
SHAPING
CIRCUIT

MTA TRAFFIC
OUTPUT
(SHAPING)

I

O

PARAMETER
MEMORY

**22**

# FIG. 9

CELL MEMORY BUS

203 205 20

201 204

206

UTOPIA INPUT BUS

INPUT FIFO

INTERFACE WITH CELL MEMORY

INPUT MODULE

OUTPUT MODULE

UTOPIA OUTPUT BUS

202

CONTROL AUTOMATION

INPUT AUTOMATION

OUTPUT AUTOMATION

207 208

INTERNAL MODULE

209

MICROPROCESSOR INTERFACE

INTERFACE WITH PARAMETER MEMORY

RESTART AUTOMATION

210

211

212

CONTROL BUS     PARAMETER MEMORY BUS

**FIG. 10**

| | European Patent Office | EUROPEAN SEARCH REPORT | Application Number EP 99 50 0171 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 726 985 A (NATTKAMPER DIETER ET AL) 10 March 1998 (1998-03-10) * column 20, line 40 - column 28, line 12 * --- | 1,5 | H04L12/56 H04Q11/04 |
| A | US 5 794 025 A (BERGANTINO PAUL V ET AL) 11 August 1998 (1998-08-11) * column 18, line 53 - column 20, line 56 * ----- | 1,5 | |

TECHNICAL FIELDS SEARCHED (Int.Cl.7)

H04L
H04Q

The present search report has been drawn up for all claims

| Place of search | Date of completion of the search | Examiner |
|---|---|---|
| THE HAGUE | 17 January 2000 | Lindner, A |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

**ANNEX TO THE EUROPEAN SEARCH REPORT
ON EUROPEAN PATENT APPLICATION NO.**

EP 99 50 0171

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2000

| Patent document cited in search report | | Publication date | Patent family member(s) | | Publication date |
|---|---|---|---|---|---|
| US 5726985 | A | 10-03-1998 | NONE | | |
| US 5794025 | A | 11-08-1998 | AU | 3004197 A | 26-11-1997 |
| | | | WO | 9742566 A | 13-11-1997 |

For more details about this annex : see Official Journal of the European Patent Office, No. 12/82